**Europäisches Patentamt**

**European Patent Office**

**Office européen des brevets**

(19)

(11) Veröffentlichungsnummer : **0 501 946 A2**

# (12) EUROPÄISCHE PATENTANMELDUNG

(21) Anmeldenummer : **92890044.8**

(22) Anmeldetag : **25.02.92**

(51) Int. Cl.$^5$ : **H04B 10/12, H04B 10/24**

(30) Priorität : **01.03.91 AT 438/91**
**01.03.91 AT 439/91**

(43) Veröffentlichungstag der Anmeldung :
**02.09.92 Patentblatt 92/36**

(84) Benannte Vertragsstaaten :
**AT BE CH DE DK ES FR GB IT LI NL SE**

(71) Anmelder : **Alcatel Austria Aktiengesellschaft**
**Scheydgasse 41**
**A-1210 Wien (AT)**

(72) Erfinder : **Strasser, Helmut Dr.Ing.**
**Hockegasse 69**
**A-1180 Wien (AT)**
Erfinder : **Wolfgang, Johann Ing.**
**Carabelligasse 5/134**
**A-1210 Wien (AT)**
Erfinder : **Doringer, Kurt, Ing.**
**Wienergasse 47**
**A-2380 Perchtoldsdorf (AT)**

(54) **Optisches Nachrichtenübertragungssystem zur doppelt gerichteten Übertragung zwischen einer Zentrale und mehreren Teilnehmern.**

(57)    Optisches Nachrichtenübertragungssystem zur doppelt gerichteten Übertragung von Nachrichtensignalen zwischen einer Zentrale (1) und mehreren Teilnehmereinrichtungen (5), bei der die Zentrale (1) über einen oder zwei Monomode-Lichtwellenleiter (2) an eine Vorfeldeinrichtung (3) angeschlossen ist, die einer Gruppe von Teilnehmern (5) gemeinsam ist und sich in deren Nähe befindet, und bei dem die Teilnehmereinrichtungen (5) über Lichtwellenleiter an die Vorfeldeinrichtung (3) angeschlossen sind. ie Teilnehmereinrichtungen (5) haben optische Sender, deren optisches Ausgangssignal nicht an die Übertragungseigenschaften von Monomode-Lichtwellenleitern angepaßt ist, und die Vorfeldeinrichtung (3) enthält einen Umsetzer (10, 11), der die von den Teilnehmereinrichtungen (5) zur Vorfeldeinrichtung (3) übertragenen optischen Signale in optische Signale umsetzt, die zur weiteren Übertragung über den Monomode-Lichtwellenleiter (2) geeignet sind.

EP 0 501 946 A2

FIG. 2

Die Erfindung bezieht sich auf ein optisches Nachrichtenübertragungssystem zur doppelt gerichteten Übertragung von Nachrichtensignalen zwischen einer Zentrale und mehreren Teilnehmereinrichtungen , bei der die Zentrale über einen oder zwei Monomode-Lichtwellenleiter an eine Vorfeldeinrichtung angeschlossen ist, die einer Gruppe von Teilnehmern gemeinsam ist und sich in deren Nähe befindet, und bei dem die Teilnehmereinrichtungen über Lichtwellenleiter an die Vorfeldeinrichtung angeschlossen sind.

Neben der Übertragung von Daten über metallische Leiter, insbesondere Rupfer, in Form von verdrillten Leitungen oder Koaxialkabeln ist es bekannt, Lichtwellenleiter einzusetzen, wobei die zu übertragende Information durch Modulation einer Lichtquelle, beispielsweise einer Laserdiode, in einen derartigen Lichtwellenleiter eingespeist wird. Die Ausbreitung von derartigen in Lichtwellen enthaltenen Informationen kann über bekannte Glasfasernetze erfolgen, welche beispielsweise Baumstruktur aufweisen können und über eine Reihe von passiven Kopplern zu Anschlußstellen geführt werden können. Die Rausanschlußstellen bei einem derartigen öffentlichen Netz sind bei den bekannten Ausbildungen als aktive Multiplexer ausgeführt, von welchen konventionelle Kupferleitungen zu jedem Endgerät, beispielsweise Telefonen, geführt sind.

Im Bereich des öffentlichen Netzes werden hiebei gegenwärtig sogenannte Monomodefasern eingesetzt, welche sich durch kleinere Dämpfung und größere Bandbreite als Multimodefasern auszeichnen. Monomodefasern können unter Ausnützen ihrer besseren Dämpfungseigenschaften in erster Linie in bestimmten Wellenlängenbereichen erfolgreich betrieben werden, wobei die in diesem Zusammenhang erforderlichen Laser, die auch in jedem Terminal bzw. in jedem optischen Netzwerkabschlußglied eingebaut sein müssen, überaus teuer sind.

Um bei bekannten öffentlichen Netzen mit passiven Kopplungsgliedern mehrere Endgeräte, beispielsweise von mehreren Teilnehmern in einem Gebäude, betreiben zu können, werden für die Leitungen innerhalb des Gebäudes gleichfalls die Monomodefasern eingesetzt und es müssen Endgeräte mit den relativ teuren für Monomodebetrieb geeigneten modulierbaren Lichtquellen bzw. Laserquellen eingesetzt werden. am einen derartigen Hausanschluß und die Installation in größeren Gebäuden billiger zu gestalten, muß ein relativ aufwendiger Umsetzer, beispielsweise der genannte Multiplexer, eingesetzt werden, welcher einen relativ hohen Energiebedarf hat und optische Signale in elektrische Signale umsetzen muß, um diese über teilnehmerindividuelle elektrische Kupferleitungen zu den Endteilnehmern leiten zu können. Insbesondere dann, wenn bei einer derartigen Umsetzung von optischen Signalen in elektrische Signale die hohen Qualitätsstandards der Übertragung im ursprünglichen Glasfasernetz auch nur annähernd aufrechterhalten werden sollen, erfordert ein derartiger Multiplexer neben einem hohen Energieaufwand auch einen hohen elektronischen Aufwand, wodurch derartige Geräte überaus teuer sind. Bedingt durch den relativ hohen Stromverbrauch und die Tatsache, daß ein derartiger Multiplexer in der Regel eine Reihe von Teilnehmern versorgen soll, ergeben sich darüberhinaus Probleme mit der Frage der Stromversorgung, da die Stromversorgung auf Grund der Anzahl der Teilnehmer redundant erfolgen muß. Die Zuordnung des jeweiligen Stromverbrauches des Multiplexers für die Benützungszeit eines bestimmten Teilnehmers erfordert einen weiteren schaltungstechnischen Aufwand.

Optische Nachrichtenübertragungssysteme der eingangs erwähnten Art sind beispielsweise in der EP-A2-0 164 652, EP-A2-0 386 482, EP-A2-0 394 728 und in der DE-0S-41 04 084 beschrieben. Allen diesen bekannten Systemen ist gemeinsam, daß sie die optischen Signale über passive Verzweigungen bis an die Endgeräte der Teilnehmer heranführen. Es müssen daher auch innerhalb des Gebäudes die mechanisch heiklen Monomodefasern eingesetzt werden und jedes einzelne Endgerät muß als Sender eine teure, für Monomodebetrieb geeignete modulierbare Laserquelle enthalten.

Die Erfindung zielt nun darauf ab, ein Nachrichtenübertragungssystem der eingangs genannten Art zu schaffen, mit welchem es möglich ist, die Qualität der Übertragung in Glasfasernetzen auch im Teilnehmerbereich aufrechtzuerhalten, und gleichzeitig die Möglichkeit geschaffen wird, mit wesentlich kostengünstigeren Bauteilen das Auslangen zu finden. Inbesondere zielt die Erfindung darauf ab, eine Einrichtung zu entwerfen, welcher den Anschluß von kostengünstigeren Multimodekomponenten, wie beispielsweise Multimodekopplern, Duplexern, Steckern u. dgl., ermöglicht. Derartige Multimodekomponenten zeichnen sich in der Regel durch einen größeren Durchmesser aus, so daß auch ihre Handhabung bei der Herstellung von Anschlüssen wesentlich einfacher ist als die Handhabung von Monomodekomponenten . Schließlich erlaubt die Verwendung von Multimodekomponenten auch die Verwendung von wesentlich kostengünstigeren Lasern, wie sie in großer Menge als billige Industriebauteile zur Verfügung stehen.

Zur Lösung dieser Aufgabe besteht die erfindungsgemäße Ausbildung des Nachrichtenübertragungssystems im wesentlich darin, daß die Teilnehmereinrichtungen optische Sender haben, deren optisches Ausgangssignal nicht an die Übertragungseigenschaften von Monomode-Lichtwellenleitern angepaßt ist, und daß die Vorfeldeinrichtung einen Umsetzer enthält, der die von den Teilnehmereinrichtungen zur Vorfeldeinrichtung übertragenen optischen Signale in optische Signale umsetzt, die zur weiteren Übertragung aber den Monomode-lichtwellenleiter geeignet sind. Bei entsprechend begrenzter Leitungslänge kann das vom Vermittlungsamt oder -knoten ankommende Signal über eine Multimodefaser weitergeleitet und von konventionellen Empfängern noch sicher empfangen werden. Dadurch, daß die von den Endgeräten zum Vermittlungsamt oder -knoten übertragende Monomodefasern über einen Umsetzer angeschlossen ist, wird für den Sendebetrieb der Endgeräte die Möglichkeit geschaffen, ein von beliebigen Sendebauteilen, beispielsweise billigeren Laserdioden, ausgestrahltes Signal in einer Weise aufzubereiten und zu verstärken, welche die Einspeisung in ein Monomodenetz, wie es dem öffentlichen Netz entspricht, ermöglicht. Je nach Auslegung und spezifischer Betriebsart des öffentlichen Glasfasernetzes kann somit bei einer derartigen Ausbildung ein einziger Umsetzer für eine Vielzahl von Teilnehmern verwendet werden, welcher einen wesentlich geringeren Energiebedarf aufweist als die bekannten Multiplexer für die Umsetzung von optischen Signalen in elektrische Signale und deren Weiterleitung auf teilnehmerindividuellen Kupferleitungen.

In besonders bevorzugter Weise ist hiebei der Umsetzer als optoelektronischer Verstärker ausgebildet, so daß auch bei entsprechend billigerem Multimodeglasfasernetz im Bereich der Endstellen bzw. Nebenstellenanlage ein entsprechend hohes Signal für die Übertragung im öffentlichen Netz zur Verfügung steht.

Kostengünstige Laser, wie sie in Endgeräten Verwendung finden und beispielsweise aus der Compact-Disk- und Printertechnologie bekannt sind, arbeiten üblicherweise mit einer Wellenlänge von etwa 800 nm, wogegen öffentliche Netze, insbesondere Monomodefasernetze, mit Vorteil im zweiten und/oder dritten Fenster, d.h. bei Wellenlängen von 1300 bzw. 1500 nm, betrieben werden. Um eine Heranführung der Signale der Endstellen bzw. der Nebenstellenanlage an die Erfordernisse einer Monomodeübertragung im öffentlichen Netz zu ermöglichen, ist daher mit Vorteil die Ausbildung so getroffen, daß der Umsetzer als Wellenlängenwandler ausgebildet ist.

Wenn gemäß einer Ausgestaltung der Erfindung der Umsetzer als Repeater ausgebildet ist, der die Impulsform und das Impuls-Timing auffrischt, erfolgt an dieser Stelle neben der erforderlichen Anhebung der Signalamplitude auch eine Regenerierung der Signalform und es werden Beeinträchtigungen des optischen Signals durch Dispersion, Laufzeitunterschiede von Signalteilen und durch Bandbreite-Begrenzungen weitgehend beseitigt.

Mit Rücksicht auf den Einsatz von kostengünstigen Laserdioden in Endgeräten und den Umstand, daß diese im Multimodebetrieb abstrahlenden Laserdioden mit relativ geringer Wellenlänge arbeiten, ist mit Vorteil die Ausbildung so getroffen, daß der Sender des Wellenlängenwandlers eine größere Wellenlänge abstrahlt als der Empfänger empfängt.

Die im Teilnehmerbereich verlegten Fasern können Monomodefasern sein, deren Eigenschaften allerdings nicht voll genützt werden, sie können jedoch, wie vorher erwähnt, mit Vorteil als Multimodefasern ausgebildet sein, wodurch sich ihre Handhabung auf Grund ihres größeren Durchmessers wesentlich erleichtert. Ein direkter optischer Übergang von Signalen aus einem derartigen im Multimodebetrieb arbeitenden Netz auf Monomodefasern ist notwendigerweise mit hohen Verlusten verbunden, da in der Monomodefasern nur mehr ein Teilbereich der ursprünglichen Moden weitergeleitet werden kann. Um derartige Verluste gering zu halten bzw. zu kompensieren, kann mit Vorteil die Ausbildung so getroffen sein, daß der Umsetzer als Modenwandler ausgebildet ist.

Im Falle von größeren Teilnehmernetzen nach der Anschlußstelle zum öffentlichen Netz kann es vorteilhaft sein, die Ausbildung so zu treffen, daß die Vorfeldeinrichtung in dem in der Übertragungsrichtung zu den Endgeräten wirksamen Zweig einen zum Modenwandler für die andere Übertragungsrichtung komplementären Modenwandler bzw. gegebenenfalls einen optoelektronischen Verstärker-Modenwandler enthält, wobei die beiden Modenwandler über eine Weiche an den zu den Endgeräten führenden, für beide Übertragungsrichtungen wirksamen Lichtwellenleiter angeschlossen sind, wobei mit Vorteil die Weichen als wellenlängenselektive Weichen ausgebildet sind. Insbesondere die Verwendung derartiger wellenlängenselektiver Weichen hat hiebei den Vorteil, daß Rückkopplungen auf die jeweiligen Sendedioden, welche bei höheren Leistungen zu einer Zerstörung der Sendedioden führen können, vermieden werden.

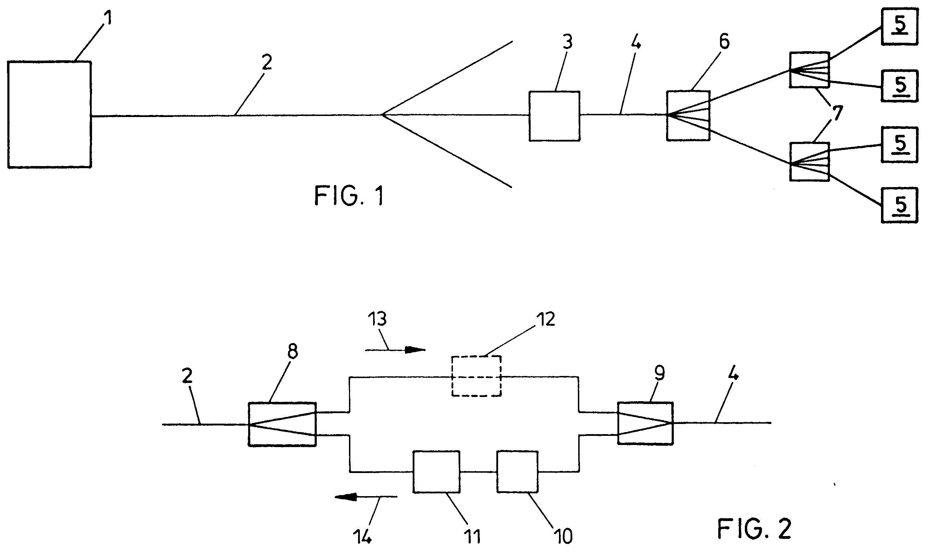

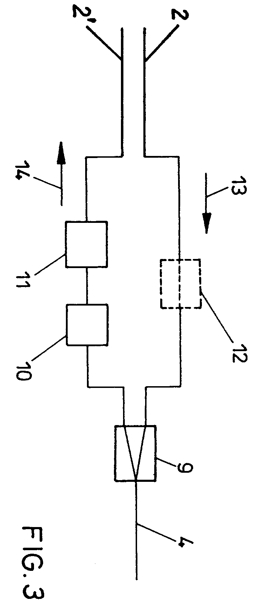

Die Erfindung wird nachfolgend an Hand eines in der Zeichnung schematisch dargestellten Ausführungsbeispieles näher erläutert. In dieser zeigen Fig.1 schematisch einen Ausschnitt aus einem mit Lichtwellenleitern aufgebauten digitalen Telefon- und Datennetz, Fig.2 Einzelheiten einer Vorfeldeinrichtung der Anordnung von Fig.1 und Fig.3 eine Variante der Vorfeld= einrichtung nach Fig.2.

Bei der Anordnung nach Fig.1 gehen von einem Vermittlungsamt oder -knoten 1 von Monomodefasern gebildete Lichtwellenleiter 2 aus, von welchen einer dargestellt ist. Derartige Lichtwellenleiter ermöglichen gleichzeitige Gesprächs- und Datenübertragung in beiden Richtungen über eine einzige Faser mit hohen Übertragungsraten von einigen zehn MBd, wobei beispielsweise für die eine Übertragungsrichtung eine Wellenlänge von etwa 1300 nm und für die andere Übertragungsrichtung eine Wellenlänge von etwa 1500 nm eingesetzt wird. Die geringe Dämpfung solcher Lichtwellenleiter bei der angegebenen Betriebsart erlaubt die Überbrückung von Entfernungen von 5 bis 10 km ohne Zwischenverstärker, wobei erforderlichenfalls noch passive Verzweigungen auf mehrere Lichtwellenleiter vorgesehen sein können.

Bei Verzweigungen des vom Vermittlungsamt oder -knoten 1 kommenden Lichtwellenleiters 2 auf eine größere Anzahl von Leitungen, beispielsweise bei der Einführung in ein Wohn- oder Industriegebäude, besteht grundsätzlich die Möglichkeit der Anwendung eines Multiplexers mit örtlicher Stromversorgung, in welchem die optischen Signale des Lichtwellenleiters in elektrische Signale für die Endgeräte einzelner Teilnehmer umgewandelt werden und umgekehrt, wobei dann die Endgeräte der Teilnehmer über Kupferleitungen an den Multiplexer angeschlossen sind. Ein derartiger Multiplexer ist ein kompliziertes und teures Gerät mit relativ hoher Leistungsaufnahme.

Wollte man die optischen Signale des Lichtwellenleiters 2 über passive Verzweigungen bis an die Endgeräte der Teilnehmer heranführen, dann müßten auch innerhalb des Gebäudes die mechanisch heiklen Monomodefasern eingesetzt werden und jedes einzelne Endgerät müßte als Sender eine teure, für Monomodebetrieb geeignete modulierbare Laserquelle enthalten.

Um die Heranführung der optischen Signale vom Lichtwellenleiter 2 bis an die Endgeräte der Teilnehmer wirtschaftlicher zu gestalten, wird vorgeschlagen, bei der Anschlußstelle des Lichtwellenleiters 2 für ein Gebäude mit mehreren Teilnehmern einen Vorfeldeinrichtung 3 vorzusehen, die die über den von einer Monomodefaser gebildeten Lichtwellenleiter 2 ankommenden Signale an eine Multimodefaser 4 für die Hausverkabelung weiterleitet und die von den Endgeräten der Teilnehmer über die Multimodefaser 4 ankommende optische Signale auf eine für die Weiterleitung über die Monomodefaser des Lichtwellenleiters 2 geeignete Wellenlänge umsetzt. Die Multimodefaser 4 kann die auf der Monomodefaser des Lichtwellenleiters 2 üblichen Wellenlängen von 1300 nm und 1500 nm ohne weiters übertragen, jedoch wird für die Gegenrichtung gebäudeintern eine Wellenlänge von etwa 800 nm aus ökonomischen Gründen bevorzugt, weil dadurch für die Sender in den Endgeräten der Teilnehmer preisgünstige Laserlichtquellen eingesetzt werden können. Zwischen dem Signalverzweiger 3 und den Endgeräten 5 der Teilnehmer können je nach Bedarf Verzweigungen 6 und 7 in einer oder mehreren Stufen vorgesehen sein.

Einzelheiten einer Ausführungsform einer Vorfeldeinrichtung 3 sind in Fig.2 dargestellt. Die Vorfeldeinrichtung weist eingangsseitig und ausgangsseitig als Weiche je einen Duplexer 8, 9 auf, welche insbesondere die Signale wellenlängenabhängig trennen. Das vom Vermittlungsamt oder -knoten über den Lichtwellenleiter 2 ankommende Monomodesignal mit einer Wellenlänge von beispielsweise 1300 nm kann im einfachsten Fall auf dem in Fig.2 oberen Zweig über den Duplexer 8 und den Duplexer 9 im wesentlichen unverändert auf die Multimodefaser 4 weitergeleitet werden, wogegen das von einem Teilnehmer-Endgerät über die Multimodefaser 4 ankommende Signal mit einer Wellenlänge von beispielsweise 800 nm über den Duplexer 9 in dem in Fig.2 unteren Zweig einem in eine Übertragungsrichtung wirksamen Verstärker zugeführt wird, der das ankommende Signal in ein optisches Signal mit geeigneter Wellenlänge und Schwingungsart zur Weiterleitung über den Duplexer 8 auf den von einer Monomodefaser gebildeten Lichtwellenleiter 2 umwandelt. Eine einfache Möglichkeit hiefür besteht in der Anordnung eines Bauteiles 10, bestehend aus einer Fotodiode mit einem nachgeschalteten Verstärker für das von der Fotodiode gelieferte elektrische Signal und Ansteuerung einer Infrarot- bzw. Laserdiode 11 mit dem verstärkten elektrischen Signal, wodurch von den Teilnehmer-Endstellen ankommende optische Signale in umgewandelter Form zum Vermittlungsamt oder -knoten weitergeleitet werden.

Eine ähnliche Anordnung wie im unteren Zweig der Fig.2 kann bei Bedarf zur Wellenlängenumsetzung und/oder Modenwandlung, wie strichliert als Bauteil 12 angedeutet, auch im oberen Zweig zwischen den Duplexern 8 und 9 vorgesehen werden. Die Übertragungsrichtungen in den beiden Zweigen sind mit Pfeilen 13, 14 angedeutet.

Die Ausstattung der beiden Zweige der Vorfeldeinrichtung hängt unter anderem auch von der räumlichen Ausdehnung des Multimodefasernetzes und von der Anzahl der zu versorgenden Teilnehmer ab. Die Länge der Multimodefaser wird in einem kleinen Gebäude kaum 100 m betragen, kann sich aber in einem großen Gebäude bis auf etwa 1000 m erstrecken.

Wenn dies für einen geplanten späteren Ausbau einer Anlage zweckdienlich erscheint, können für die Hausverkabelung von vornherein Monomodefasern eingesetzt werden, wobei aber für die Sender in den Endgeräten bei den geringen Leitungslängen innerhalb des Gebäudes dennoch die preiswerten Laserdioden für eine Wellenlänge von etwa 800 nm zu verwenden sind.

In Fig.3 ist eine Variante der Vorfeldeinrichtung aus Fig.2 dargestellt. Sie wird dann verwendet, wenn für die Übertragung zwischen Zentrale und Vorfeldeinrichtung für die beiden Übertragungsrichtungen gesonderte Monomodefasern 2, 2′ vorgesehen sind. In diesem Falle erübrigt sich eine wellenlängenselektive Weiche als Duplexer an der Eingangsseite der Vorfeldeinrichtung und es sind in dieser gleiche Komponenten einsetzbar wie im Vermittlungsamt. Weiters ist für die Monomodefaser zwischen Vermittlungsamt und Vorfeldeinrichtung nur ein Fenster im Wellenlängenbereich belegt.

**Patentansprüche**

1.  Optisches Nachrichtenübertragungssystem zur doppelt gerichteten Übertragung von Nachrichtensignalen zwischen einer Zentrale (1) und mehreren Teilnehmereinrichtungen (5), bei der die Zentrale (1) über einen oder zwei Monomode-Lichtwellenleiter an eine Vorfeldeinrichtung (3) angeschlossen ist, die einer Gruppe von Teilnehmern (5) gemeinsam ist und sich in deren Nähe befindet, und bei dem die Teilnehmereinrichtungen (5) über Lichtwellenleiter an die Vorfeldeinrichtung (3) angeschlossen sind,
    **dadurch gekennzeichnet,**
    daß die Teilnehmereinrichtungen (5) optische Sender haben, deren optisches Ausgangssignal nicht an die Übertragungseigenschaften von Monomode-Lichtwellenleitern angepaßt ist, und daß die Vorfeldeinrichtung (3) einen Umsetzer (10, 11) enthält, der die von den Teilnehmereinrichtungen (5) zur Vorfeldeinrichtung (3) übertragenen optischen Signale in optische Signale umsetzt, die zur weiteren Übertragung über den Monomode-Lichtwellenleiter (2) geeignet sind.

2.  Optisches Nachrichtenübertragungssystem nach Anspruch 1, dadurch gekennzeichnet, daß der Umsetzer (10,11) als optoelektronischer Verstärker ausgebildet ist.

3.  Optisches Nachrichtenübertragungssystem nach Anspruch 1 oder 2, dadurch gekennzeichnet, daß der Umsetzer (10,11) als Wellenlängenwandler ausgebildet ist.

4.  Optisches Nachrichtenübertragungssystem nach Anspruch 1, 2 oder 3, dadurch gekennzeichnet, daß der Umsetzer (10,11) als Repeater ausgebildet ist, der die Impulsform und das Impuls-Timing auffrischt.

5.  Optisches Nachrichtenübertragungssystem nach Anspruch 3 oder 4, dadurch gekennzeichnet, daß der Sender (11) des Wellenlängenwandlers eine größere Wellenlänge abstrahlt als der Empfänger (10) empfängt.

6.  Optisches Nachrichtenübertragungssystem nach einem der Ansprüche 1 bis 5, dadurch gekennzeichnet, daß der Umsetzer (10,11) als Modenwandler ausgebildet ist.

7.  Optisches Nachrichtenübertragungssystem nach Anspruch 6, dadurch gekennzeichnet, daß die Vorfeldeinrichtung (3) in dem in der Übertragungsrichtung (13) zu den Endgeräten wirksamen Zweig einen zum Modenwandler (10,11) für die andere Übertragungsrichtung (14) komplementären Modenwandler (12) bzw. gegebenenfalls einen optoelektronischen Verstärker-Modenwandler enthält, wobei die beiden Modenwandler (10,11 bzw. 12) über eine Weiche (9) an den zu den Endgeräten (5) führenden, für beide Übertragungsrichtungen (13,14) wirksamen Lichtwellenleiter (4) angeschlossen sind.

8.  Optisches Nachrichtenübertragungssystem nach Anspruch 7, dadurch gekennzeichnet, daß die Weiche (9) als wellenlängenselektive Weiche ausgebildet ist.

FIG. 1

FIG. 2

FIG. 3